# EUROPEAN PATENT SPECIFICATION

(11) **EP 0 435 140 B1**
(45) Date of publication and mention of the grant of the patent: **23.07.1997**
(21) Application number: 90124609.0
(22) Date of filing: 18.12.1990
(51) Int. Cl.: H01M 12/08, H01M 10/52

(54) **Zinc-halogen secondary battery with feature of enhanced charge efficiency**
Zink-Halogen-Sekundärbatterie mit verbessertem Ladungswirkungsgrad
Pile secondaire de zinc-halogène caractérisée par efficacité de charge améliorée

(30) Priority: 21.12.1989 JP 147238/89 U
(43) Date of publication of application: 03.07.1991
(73) Proprietor: Kabushiki Kaisha Meidensha, Shinagawa-ku Tokyo 141 (JP)
(72) Inventor: Hashimoto, Takafumi, Tokyo (JP)
(74) Representative: Grünecker, Kinkeldey, Stockmair & Schwanhäusser Anwaltssozietät

(56) References cited:
- PATENT ABSTRACTS OF JAPAN, vol. 13, no. 68 (E-716)[3417], 16th February 1989; & JP-A-63 252 366 (FURUKAWA ELECTRIC CO., LTD) 19-10-1988
- PATENT ABSTRACTS OF JAPAN, vol. 13, no. 160 (E-744)[3508], 18th April 1989; & JP-A-63 314 782 (FURUKAWA ELECTRIC CO., LTD) 22-12-1988

## Description

### BACKGROUND OF THE INVENTION

### Field of the Invention

The present invention relates generally to a zinc-halogen secondary battery for accumulating electric power. More specifically, the invention relates to a zinc-halogen secondary battery which provides enhanced charge efficiency by avoiding bubble attaching on electrodes during charging. In particular the present invention refers to a zinc-halogen secondary battery, having at least one core cell having electrodes and defining a cathode chamber and an anode chamber separated by means of a separator and further having a manifold communicating with said core cell for filling the electrolyte to said core cell.

### Description of the Prior Art

In recent years, a plurality of cell type electric power accumulation systems have been developed. For use in such power accumulation systems, various zinc-halogen batteries, e.g. zinc-bromine batteries, zinc-chloride batteries and so forth, have been delveloped. In the event that such a battery is used for accumulating electric power, a large electric power storage capacity is available, generated by circulating electrolyte and external active material. However, in some technologies, such as uninterruptible power sources, so large a capacity of accumulation of electric power is not required. In such cases, a non-flow type or fluid static type battery is useful.

In such a battery, a problem is encountered in that bubbles are generated and attached to a cathode electrode surface, while the battery is in operation. Bubbles are formed by air heated with the electrolyte or by direct reaction of bromine redissolved from the anode electrode with zinc extracted from the cathode electrode for generating hydrogen to form hydrogen bubbles. In the alternative, when an amount of zinc in the vicinity of the cathode electrode upon electrodeposition of zinc an amount of generated hydrogen is rapidly increased when the amount of zinc becomes smaller than or equal to 0.5 mol/1, the generated hydrogen forms the bubbles.

When charging is continued while the bubbles are present, zinc cannot be deposited on the cathode electrode at portions where a bubble is attached, thus degrading the smoothness of the cathode electrode surface and formation of dendritic crystal may also occur to cause degradation of the battery efficiency.

The bubbles can be removed by circulating the electrolyte by means of a fluid pump. In such a case, shuttle current will flow through a manifold to cause degradation of the uniformity of electrodeposition of zinc at a plurality of cells and can cause heat. Therefore, removal of bubbles can be accomplished by generating flow of the electrolyte only when the battery voltage is zero.

From JP-A-63252366, there is known a gas circulation type zinc-halogen battery in which the gas dissolved in the electrolyte is expelled by the gas mainly comprising inert gas, and the circulation gas passed through the electrolyte is supplied to an electrolyte exhaust manifold of which the upper part is filled with the inert gas. Thereby, the concentration of chlorine in a gas phase within the manifold is relatively decreased and the redissolution of the gas can be prevented.

Therefore, it is an object of the present invention to provide a zinc-halogen secondary battery which is successful in removing bubbles from a negative electrode.

In order to accomplish the aforementioned and other objects, a zinc-halogen secondary battery, as defined in the precharacterizing portion of claim 1, is characterised in that
said manifold further includes a connecting portion and in that a filter is provided having an input connected to said connecting portion of said manifold and an output, wherein said filter contains means for removing a gaseous halogen component present in exhaust gas before said exhaust gas reaches the output of said filter; and in that
an exhaust pump for exhausting gas in the electrolyte is provided having a suction side connected to said output of said filter and having an exhaust side oriented toward an ambient atmosphere.

In the preferred construction, the filter is filled with zinc particles.

According to another aspect of the invention, a method for removing gas from the zinc-halogen secondary battery defined in claim 1, is defined in claim 4.

### Brief Description of the Drawings

The present invention will be understood more fully from the detailed description given herebelow and from the accompanying drawings of the preferred embodiment of the invention, which however, should not be taken to limit the invention to the specific embodiment but are for explanation and undertanding only.

In the drawings:

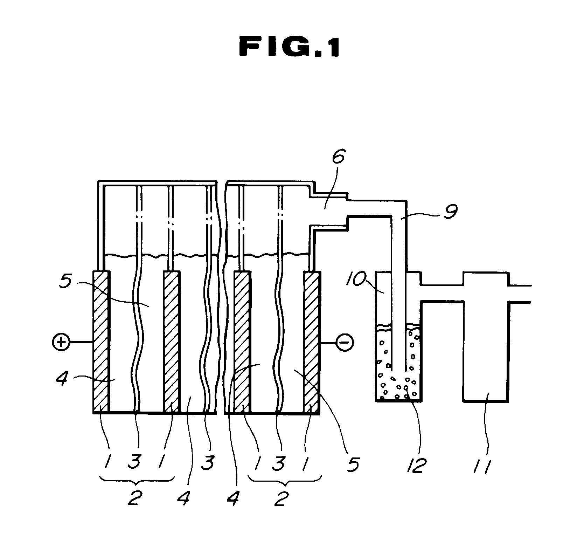

Figure 1 is a fragmentary illustration of the preferred embodiment of a zinc-halogen secondary battery according to the present invention;
Figure 2 is an enlarged partial perspective view of an electrode, which is illustrated to show formation of dendrite on the electrode due to the presence of bubbles; and
Figure 3 is a fragmentary illustration of the zinc-halogen secondary battery of the prior art.

### Description of the Preferred Embodiment

Referring now to the drawings, the preferred embodiment of a zinc-halogen secondary battery has a plurality of core cells 2. Each of the core cells has an anode chamber 4 and a cathode chamber 5 separated from each other by means of a separator 3. A manifold 6 is formed for filling the core cells with electrolyte. Anode and cathode electrodes 1 are provided in the cells.

In the shown embodiment, the bipolar-type secondary battery is formed by piling ten core cells 2, each having electodes having a surface area of 800 cm².

To the manifold 6, a filter 10 is connected via piping 9. The filter 10 is connected to an exhaust pump 11. The filter 10 is filled with zinc particles 12. In the shown embodiment, the exhaust pump 11 employed has a capacity of 550 mmHg of vacuum degree 18l/min exhaust efficiency and 20W of input.

With the shown construction, the exhaust pump 11 was driven for 10 minutes before charging was initiated. During this process, the bromine gas contained in the exhaust gas can be removed by zinc in the filter 10. Therefore, bromine gas is never discharged through the exhaust pump 11.

After removing bubbles through the foregoing process, charging is performed at 8A for 1 hour. Then, the charged power is discharged for lowering the battery voltage down to 10V. This charge/discharge cycle is repeated for 6 cycles, then, after charging in the 7th cycle, the battery is dismantled and subjected to inspection. As a result of the inspection, no bubble traces or dendritic formation were observed.

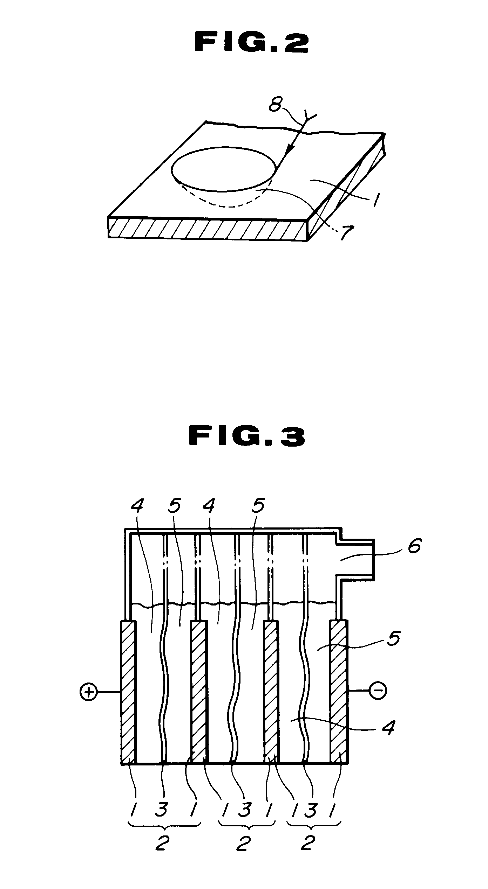

A comparative experiment was performed utilizing a battery assembly as illustrated in Figure 3. As can be seen from Figure 3, the shown example is differentiated from that in the preferred embodiment in absence of the filter 10 and the exhaust pump 11. This experiment was performed under the same operating conditions as set forth above. Namely, charge/discharge cycles are repeated 6 times, and after charging process in the 7th cycle, the battery was dismantled and subjected to inspection. As a result of the inspection, bubble traces 7 and dendritic formation 8, as shown in Figure 2 were found.

From this, gas performance in the shown embodiment can be successfully proven.

## Claims

1. A zinc-halogen secondary battery, having at least one core cell (2) having electrodes (1) and defining a cathode chamber (5) and an anode chamber (4) separated by means of a separator (3) and further having a manifold (6) communicating with said core cell for filling the electrolyte to said core cell (2),
**characterised in that**
said manifold (6) further includes a connecting portion (9) and in that a filter (10) is provided having an input connected to said connecting portion (9) of said manifold and an output, wherein said filter (10) contains means (12) for removing a gaseous halogen component present in exhaust gas before said exhaust gas reaches the output of said filter; and in that
an exhaust pump (11) for exhausting gas in the electrolyte is provided having a suction side connected to said output of said filter (10) and having an exhaust side oriented toward an ambient atmosphere.

2. A secondary battery as set forth in claim 1, wherein said filter contains zinc particles.

3. A secondary battery as set forth in claim 1, wherein said gaseous halogen component is gaseous bromine.

4. A method for removing gas from the zinc-halogen secondary battery defined in claim 1,
**characterised by**
driving said exhaust pump (11) in advance of the charging process for removing gas from said electrolyte and for exhausting through the filter for removing pollutant in the exhaust gas to be exhausted in the filter (10).

## Patentansprüche

1. Zink-Halogen-Akkumulatorenbatterie bzw. Sammelbatterie, mit wenigstens einer Kernzelle (2) mit Elektroden (1) und welche eine Kathodenkammer (5) und eine Anodenkammer (4) definiert, getrennt durch ein Trennelement (3) und des weiteren mit einem Leitungssystem (6), welches mit der Kernzelle in Verbindung steht, um den Elektrolyten in die Kernzelle (2) einzufüllen,
**dadurch gekennzeichnet,** daß
das Leitungssystem (6) des weiteren einen Verbindungsbereich (9) umfaßt, und daß ein Filter (10) bereitgestellt ist mit einem Einlaß, welcher mit diesem Verbindungsbereich (9) des Leitungssystems verbunden ist, und einem Auslaß, wobei der Filter (10) Mittel enthält, um einen gasförmigen Halogenbestandteil, welcher in dem Abgas enthalten ist, zu entfernen, bevor das Abgas den Auslaß des Filters erreicht; und
daß eine Auslaßpumpe (11) zum Abführen des Gases aus dem Elektrolyt bereitgestellt ist, mit einer Ansaugseite, welche mit dem Auslaß des Filters (10) verbunden ist und mit einer Auslaßseite, die zu der Umgebungsatmosphäre hin gerichtet ist.

2. Akkumulatorenbatterie bzw. Sammelbatterie nach Anspruch 1, wobei der Filter Zinkteilchen enthält.

3. Akkumulatorenbatterie bzw. Sammelbatterie nach Anspruch 1, wobei der gasförmige Halogenbestandteil gasförmiges Brom ist.

4. Verfahren zum Entfernen von Gas aus einer Zink-Halogen-Akkumulatorenbatterie bzw. Sammelbatterie nach Anspruch 1,
**dadurch gekennzeichnet,** daß
die Auslaßpumpe (11) vor dem Ladungsverfahren betrieben wird, um Gas aus dem Elektrolyten zu entfernen und durch den Filter abzulassen, so daß Verschmutzungen in dem Abgas in den Filter (10) abgeführt werden.

## Revendications

1. Batterie secondaire zinc-halogène ayant au moins un élément formant noyau (2) ayant des électrodes (1) et définissant une chambre de cathode (5) et une chambre d'anode (4) qui sont séparées par un séparateur (3) et ayant de plus un collecteur (6) communiquant avec ledit élément formant noyau pour introduire l'électrolyte dans ledit élément formant noyau (2),
caractérisée en ce que
ledit collecteur (6) comporte de plus une portion de connexion (9) et en qu'un filtre (10) est prévu ayant une entrée connectée à ladite portion de connexion (9) dudit collecteur et une sortie, où ledit filtre (10) contient un moyen (12) pour retirer un composant halogéné gazeux présent dans un gaz d'échappement avant que ledit gaz d'échappement n'atteigne la sortie dudit filtre; et en ce que
une pompe d'échappement (11) pour l'échappement d'un gaz dans l'électrolyte est prévue ayant un côté aspiration connecté à ladite sortie dudit filtre (10) et ayant un côté échappement orienté vers une atmosphère ambiente.

2. Batterie secondaire selon la revendication 1, où ledit filtre contient des particules de zinc.

3. Batterie secondaire selon la revendication 1, où ledit composant halogéné gazeux est un brome gazeux.

4. Méthode pour retirer le gaz d'une batterie secondaire zinc-halogène définiet à la revendication 1,
caractérisée par
l'entraînement de ladite pompe d'échappement (11) avant le procédé de charge pour retirer le gaz dudit électrolyte et pour son échappement à travers le filtre afin de retirer les agents polluants dans le gaz d'échappement pour un échappement dans le filtre (10).
